Europäisches Patentamt

European Patent Office (11) Veröffentlichungsnummer: **0 309 460**

Office européen des brevets **B1**

(19)

(12) # EUROPÄISCHE PATENTSCHRIFT

(45) Veröffentlichungstag der Patentschrifft:
07.02.90

(21) Anmeldenummer: 87903293.6

(22) Anmeldetag: 05.05.87

(86) Internationale Anmeldenummer:
PCT/EP 87/00238

(87) Internationale Veröffentlichungsnummer:
WO 87/06900 (19.11.87 Gazette 87/25)

(51) Int. Cl. ⁵: **B 62 D 5/30,** B 62 D 5/06,
B 62 D 5/04

(54) HILFSKRAFTLENKUNG FÜR KRAFTFAHRZEUGE.

(30) Priorität: 14.05.86 PCT/EP86/00285

(43) Veröffentlichungstag der Anmeldung:
05.04.89 Patentblatt 89/14

(45) Bekanntmachung des Hinweises auf die Patenterteilung:
07.02.90 Patentblatt 90/06

(84) Bennante Vertragsstaaten:
DE FR IT

(56) Entgegenhaltungen:
EP-A-0 051 515
EP-A-2 918 975
DE-B-1 044 641
US-A-3 002 501

(73) Patentinhaber: ZAHNRADFABRIK FRIEDRICHSHAFEN
AKTIENGESELLSCHAFT
Löwentaler Strasse 100 Postfach 2520
D-7990 Friedrichshafen 1 (DE)

(72) Erfinder: LANG, Armin
Rheinstrasse 10
D-7070 Schwäbisch Gmünd (DE)
Erfinder: ELSER, Dieter
Jägerstrasse 10
D-7087 Esslngen (DE)

(74) Vertreter: Raue, Reimund
Schwabstrasse 31
D-7990 Friedrichshafen (DE)

EP 0 309 460 B1

LIBERGRAF, STOCKHOLM 1990

## Beschreibung

Eine Hilfskraftlenkung mit zwei voneinander unabhängigen Kraftverstärkungseinrichtungen nach dem Oberbegriff des Hauptanspruches ist bereits aus der DE-PS-2 918 975 bekannt. Die erste Kraftverstärkungseinrichtung ist ein unmittelbar im Lenkgetriebegehäuse eingebauter, auf ein Lenksegment einwirkender Arbeitskolben, der als Steuereinrichtung ein Drehschieberventil aufweist. Die zweite Kraftverstärkungseinrichtung besteht aus einem separaten, an ein Lenkgestänge angeschlossenen hydraulischen Stellzylinder. Der Stellzylinder ist durch ein weiteres Drehschieberventil ansteuerbar, welches ebenso wie das zur ersten Kraftverstärkungseinrichtung gehörende Drehschieberventil konzentrisch zur Lenkspindel angeordnet ist. Jedes Drehschieberventil steht mit einer vom Fahrzeugmotor angetriebenen Pumpe in Verbindung. Die beiden Kraftverstärkungseinrichtungen verfügen also über voneinander völlig getrennte Lenkungskreise, so daß sich das Fahrzeug beim Ausfall, z. B. einer der beiden Pumpen, mit Hilfe des anderen noch intakten Lenkkreises, jedoch mit höherem Handkraftanteil, aus dem Verkehr lenken läßt.

Eine solche, auch als Zweikreislenkung bezeichnete Hilfskraftlenkung, verfügt über eine Verdoppelung (Redundanz) sämtlicher hydraulischer Bauteile, woraus sich ein erheblicher Bauaufwand ergibt. Weiterhin ist der Einbau des zusätzlichen Stellzylinders im Bereich der Lenkachse sehr oft mit Raumproblemen verbunden. Die Notwendigkeit von stabilen Anlenkpunkten am Fahrzeugrahmen und die Installation von langen Druckschläuchen für diesen Stellzylinder erfordern einen zusätzlichen Mehraufwand. Da das Öl im zusätzlichen Lenkkreis ständig umgewälzt wird, ergeben sich außerdem unnötige Durchlaufverluste.

Der Erfindung liegt daher die Aufgabe zugrunde, den Aufbau einer Lenkeinrichtung, die aus Sicherheitsgründen mit zwei voneinander unabhängigen Kraftverstärkungseinrichtungen ausgerüstet ist, einfacher zu gestalten und den Einbau in das Fahrzeug zu verbilligen. Diese Aufgabe ist durch die Merkmale der Ansprüche 1 bis 5 gelöst.

Nach dem Hauptmerkmal der Erfindung ist als zweite Kraftverstärkungseinrichtung ein Elektromotor vorgesehen, der über eine schaltbare Kupplung die Gewindespindel antreiben kann. Anstelle eines in der Herstellung und Montage kostenintensiven zweiten hydraulischen Lenkkreises, bestehend aus Ölbehälter, Pumpe, Steuerventil, separatem Stellmotor und zugehörigen Hochdruckleitungen, findet ein preiswerter Elektroantrieb mit einem handelsüblichen Elektromotor Anwendung. Da der Elektromotor nur im Notfall zum Einsatz kommt, sind Energieverluste bei funktionsfähigem hydraulischen Lenkkreis ausgeschlossen.

Nach Anspruch 2 greift in die Gewindespindel ein Wellenfortsatz ein, der eine Elektro-Lamellenkupplung trägt. Der Elektromotor treibt über ein Untersetzungsgetriebe und die Kupplung den Wellenfortsatz und damit die Gewindespindel an. Bei einem Ausfall des hydraulischen Lenkkreises mit dem in das Lenkgehäuse integrierten Arbeitskolben schaltet z. B. ein in die Lenkspindel eingebauter Drehmomentsensor den Elektromotor und die Lamellenkupplung ein. Dieser Drehmomentsensor gibt sein Schaltsignal in Abhängigkeit von der Drehrichtung und vom Lenkspindel-Betätigungsmoment. Auf diese Weise kann man die manuelle Lenkkraft durch die in das Lenkgetriebe eingeleitete elektromotorische Kraft unterstützen. Dadurch, daß der Elektromotor über ein Untersetzungsgetriebe in das Lenkgetriebe eintreibt, läßt sich ein kleiner Motor verwenden. Dieser Motor ragt nur geringfügig über die Kontur des Lenkgetriebes hinaus.

Nach Anspruch 3 sitzt der Elektromotor in Einbaulage des Lenkgetriebes unterhalb des als Segmentwelle ausgeführten Abtriebsgliedes. Hierzu läßt sich ein ohnehin vorhandener Freiraum ausnützen.

Nach Anspruch 4 ist es von Vorteil, den Elektromotor gleichachsig zur Gewindespindel an das Grundgehäuse anzubauen.

Nach Anspruch 5 bilden der Elektromotor und die schaltbare Kupplung eine in einem separaten Gehäuse an das Grundgehäuse des Lenkgetriebes angeflanschte Baueinheit. Auf diese Weise ergibt sich ein kompakter, einbaufertiger Block, der zusätzliche Montagearbeiten überflüssig macht. Das Grundgehäuse der Hilfskraftlenkung läßt sich ohne Änderungen auch in der bisherigen Art mit nur einem hydraulischen Lenkkreis verwenden. Das Grundgehäuse ist dann lediglich mit einem Deckel zu verschließen.

Die Erfindung ist nicht auf die Merkmalskombinationen der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Die Zeichnung zeigt ein Ausführungsbeispiel der Erfindung im Längsschnitt.

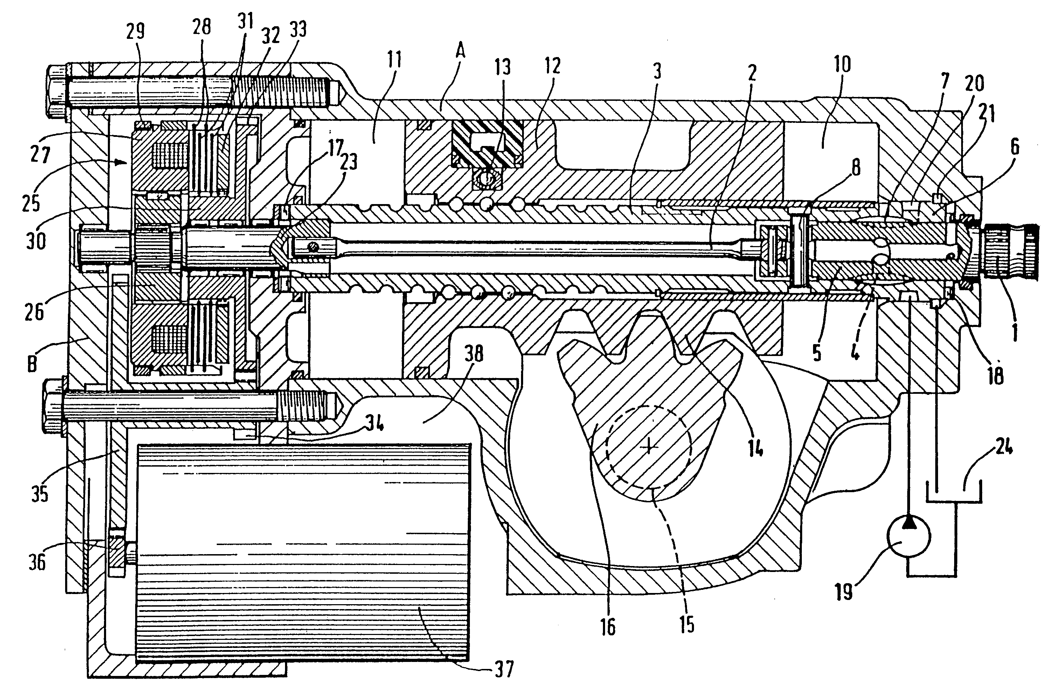

Ein der Erfindung zugrunde liegendes Blocklenkgetriebe entspricht im Grundkonzept, also in der Ausführung als Einkreislenkung, weitgehend der eingangs erwähnten DE-PS-2 918 975 (Fig. 2), so daß nachstehend nur die wichtigsten Baumerkmale erläutert werden.

In einem Grundgehäuse A steht eine mit einem nicht dargestellten Lenkhandrad verbundene Lenkspindel 1 über einen Drehstab 2 elastisch mit einer Gewindespindel 3 in Verbindung. In die Lenkspindel 1 sind axiale Steuernuten, z. B. 4, eingearbeitet, die zu einem Drehschieber 5 gehören. Der Drehschieber 5 wirkt mit einer mit der Gewindespindel 3 einstückig hergestellten Steuerbuchse 6 mit axialen Steuernuten, z. B. 7, zusammen. Der Drehschieber 5 und die Steuerbuchse 6 bilden Teile eines in solchen Hilfskraftlenkungen üblichen Drehschieberventils. Ein Querbolzen 8 begrenzt das Steuerspiel zwischen der Lenkspindel 1 und der Gewindespindel 3. Innerhalb dieses Steuerspiels regelt das Drehschieberventil 5, 6 je nach Drehrichtung den Druck in einem der Druckräume 10 bzw. 11 eines Arbeitskolbens 12 einer ersten Kraftverstärkungseinrichtung an. Der Arbeitskolben 12 greift über eine Kugelkette 13 in die Gewindespindel 3 ein und steht außerdem über eine Verzahnung 14 mit einem auf einer Lenkwelle 15 angeordneten Lenksegment 16 in Eingriff. Axiallager 17 und 18 dienen zur Aufnahme der auf die Gewindespindel 3 einwirkenden Axialkräfte. Eine von einem Fahrzeugmotor angetriebene Pumpe 19 steht über eine Zulaufnut 20 der Gewindespindel 3 mit den Steuernuten 4, 7 des Drehschieberventils 5, 6 in Verbindung. Eine Rücklaufnut 21 führt zu einem Behälter 24.

Das in Einbaulage unten liegenden Ende der Gewindespindel 3 ist drehfest mit einem Wellenfortsatz 23 gekoppelt. Der Wellenfortsatz 23 erstreckt sich in ein an das Grundgehäuse A angeflanschtes Gehäuse B und trägt eine schaltbare Kupplung 25, z. B. eine Elektro-Lamellenkupplung. Die Zeichnung zeigt einen mit Hilfe einer Keilbuchse 26 auf dem Wellenfortsatz 23 drehfest gelagerten Magnetkörper 27 mit Außenlamellen 28. Der Magnetkörper 27 trägt einen Schleifring 29 für eine nicht sichtbare Stromzuführung. Eine auf dem Wellenfortsatz 23 bei nicht erregtem Magnetkörper 27 frei drehbare Mitnehmernabe 30 trägt Innenlamellen 31 und eine Ankerscheibe 32. Die Nabe 30 ist Teil eines Zahnrades 33, das über ein Untersetzungsgetriebe 34, 35 und mit dem Antriebsritzel 36 eines als zweiter Kraftverstärker wirkenden Elektromotors 37 in Eingriff steht. Der Elektromotor 37 ist in Einbaulage der Hilfskraftlenkung unterhalb der Lenkwelle 15 in einem Freiraum 38 untergebracht. Die Längsachse des Elektromotors 37 liegt dabei parallel zur Gewindespindel 3. Hieraus ergibt sich eine besonders gedrungene Bauweise für den zweiten Kraftverstärker, wobei die Außenumrisse der gesamten Lenkeinrichtung nur unwesentlich über die einer normalen Hilfskraftlenkung mit nur einem Kraftverstärker hinausragen. Eine derartige elektrohydraulische Sicherheitslenkung läßt sich ohne Einbauprobleme und mit sehr niedrigen Montagekosten im Fahrzeug unterbringen.

## Bezugszeichen

| | |
|---|---|
| 1 | Lenkspindel |
| 2 | Drehstab |
| 3 | Gewindespindel |
| 4 | Steuernuten in 1 |
| 5 | Drehschieber |
| 6 | Steuerbuchse |
| 7 | Steuernuten in 3 |
| 8 | Querbolzen |
| 9 | — |
| 10 | Druckraum |
| 11 | Druckraum |
| 12 | Arbeitskolben |
| 13 | Kugelkette |
| 14 | Verzahnung |
| 15 | Lenkwelle |
| 16 | Lenksegment |
| 17 | Axiallager |
| 18 | Axiallager |
| 19 | Pumpe |
| 20 | Zulaufnut |
| 21 | Rücklaufnut |
| 22 | — |
| 23 | Wellenfortsatz |
| 24 | Behälter |
| 25 | schaltbare Kupplung |
| 26 | Keilbuchse |
| 27 | Magnetkörper |
| 28 | Außenlamellen |
| 29 | Schleifring |
| 30 | Mitnehmernabe |
| 31 | Innenlamellen |
| 32 | Ankerscheibe |
| 33 | Zahnrad |
| 34 | Untersetzungsgetriebe |
| 35 | Untersetzungsgetriebe |
| 36 | Antriebsritzel |
| 37 | Elektromotor |
| 38 | Freiraum |
| A | Grundgehäuse |
| B | Gehäuse |

## Patentansprüche

1. Hilfskraftlenkung für Kraftfahrzeuge mit folgenden Merkmalen:

- In einem Lenkgetriebegehäuse ist eine mit einem Arbeitskolben (12) einer ersten Kraftverstärkungseinrichtung in Eingriff stehende Gewindespindel (13) angeordnet;
- der Arbeitskolben (12) steht über eine Verzahnung (14) mit einem Abtriebsglied (16) in Verbindung;
- die Gewindespindel (3) weist in ihrem Innenraum einen Drehstab (2) auf, der diese mit der Lenkspindel (1) verbindet;
- durch eine Relativverdrehung der Lenkspindel (1) gegenüber der Gewindespindel (3) wird ein Drucölstrom über eine Steuereinrichtung einem Druckraum des Arbeitskolbens (12) zugesteuert;
- es ist eine zweite Kraftverstärkungseinrichtung für die Lenkkraftunterstützung vorgesehen,
gekennzeichnet durch folgende Merkmale:
- Die zweite Kraftverstärkungseinrichtung ist ein Elektromotor (37);
- der Elektromotor (37) steht über eine schaltbare Kupplung (25) mit der Gewindespindel (3) in Verbindung.

2. Hilfskraftlenkung nach Anspruch 1, gekennzeichnet durch folgende Merkmale:

- In die Gewindespindel (3) greift ein Wellenfortsatz (23) ein;
- der Wellenfortsatz (23) trägt als schaltbare Kupplung (25) eine Elektro-Lamellenkupplung, und

— der Elektromotor (37) steht über ein Untersetzungsgetriebe (34, 35) und die schaltbare Kupplung (25) mit der in den Wellenfortsatz (23) eingreifenden Gewindespindel (3) in Verbindung.

3. Hilfskraftlenkung nach Anspruch 1, dadurch *gekennzeichnet*, daß der Elektromotor (37) in Einbaulage des Lenkgetriebes in einem Freiraum (38) unterhalb des Abtriebsgliedes (Lenkwelle 15) angeordnet ist.

4. Hilfskraftlenkung nach Anspruch 3, dadurch *gekennzeichnet*, daß der Elektromotor (37) parallelachsig zur Gewindespindel (3) an das Grundgehäuse (A) angebaut ist.

5. Hilfskraftlenkung nach Anspruch 1, dadurch *gekennzeichnet*, daß der Elektromotor (37) und die schaltbare Kupplung (25) in einem an das Grundgehäuse (A) angeschraubten separaten Gehäuse (B) untergebracht sind.

## Claims

1. An auxiliary power steering system for automotive vehicles, having the following features:

— in a housing of a steering gearbox, a threaded spindle (3) is arranged which is in engagement with the working piston (12) of a first power assistance system;
— the working piston (12) is connected via gear teeth (14) with an output element (16);
— the threaded spindle (3) has in its internal cavity a rotary bar (2) which connects it with the steering spindle (1);
— when the steering spindle (1) is turned relative to the threaded spindle (3), a flow of pressurized oil is directed, via a control device, towards the pressure chamber of the working piston (12);
— a second power assistance system for the auxiliary power steering system is provided, *characterized* by the following features:
— the second power assistance device is an electric motor (37);
— the electric motor (37) is connected with the threaded spindle (3) via an engageable cluth (25).

2. An auxiliary power steering system according to Claim 1, *characterized* by the following features:
— a shaft extension (23) engages with the threaded spindle (3);
— the shaft extension (23) bears an electrical multi-disc clutch by way of an engageable cluth (25), and
— the electric motor (37) is connected, via a reduction gear train (34, 35) and the engageable clutch, with the threaded spindle (3) which engages with the shaft extension (23).

3. An auxiliary power steering system according to Claim 1, *characterized* in that the electric motor (37) is positioned in a cavity (38) below the output element (steering shaft 15) of the steering gear in its installed orientation.

4. An auxiliary power steering system according to Claim 3, *characterized* in that the electric motor (37) is attached to the basic housing (A) such that its spindle is parallel to the threaded spindle (3).

5. An auxiliary power steering system according to Claim 1, *characterized* in that the electric motor (37) and the engageable clutch (25) are accommodated in a separate housing (B) bolted to the basic housing (A).

## Revendications

1. Servodirection pour véhicules automobiles, présentant les particularités suivantes:

— un boîtier de direction contient un arbre fileté (3) qui est en prise sur un piston de travail (12) d'un premier dispositif d'assistance;
— le piston de travail (12) est connecté par une denture (14) à un élément de sortie (16);
— l'arbre fileté (3) comporte une cavité interne contenant une barre de torsion (2) qui le relie à la colonne de direction (1);
— au moyen d'une rotation relative de la colonne de direction (1) par rapport à l'arbre fileté (3), un flux d'huile sous pression est transmis par un dispositif de commande à une chambre de compression coopérant avec le piston (12);
— il est prévu un second dispositif d'assistance pour soutenir la force de braquage, *caractérisée* par les particularités suivantes:
— le second dispositif d'assistance est un moteur électrique (37);
— le moteur électrique (37) est relié à l'arbre fileté (3) par un embrayage commandé (25).

2. Servodirection selon la revendication 1, *caractérisée* par les particularités suivantes:

— un élément de rallonge d'arbre (23) est engagé dans l'arbre fileté (3);
— cet élément de rallonge (23) porte un embrayage électrique multidisque constituant ledit embrayage commandé (25); et
— le moteur électrique (37) est relié à l'arbre fileté (3) engagé sur l'élément de rallonge (23) au moyen d'un réducteur (34, 35) et de l'embrayage commandé (25).

3. Servodirection selon la revendication 1, *caractérisée* en ce que le moteur électrique (37) est disposé dans un espace libre (38) situé, dans la position montée de la servodirection, en dessous de l'élément de sortie (arbre de direction 15).

4. Servodirection selon la revendication 3, *caractérisée* en ce que le moteur électrique (37) est

7

juxtaposé au boîtier principal (A), son axe étant parallèle à l'arbre fileté (3).

5. Servodirection selon la revendication 1, *caractérisée* en ce que le moteur électrique (37) et l'embrayage commandé (25) sont logés dans un boîtier séparé (B) boulonné au boîtier principal (A).

EP 0 309 460 B1